(19) Europäisches Patentamt
European Patent Office
Office européen des brevets

(11) Veröffentlichungsnummer: **0 122 231**
**B1**

(12) # EUROPÄISCHE PATENTSCHRIFT

(45) Veröffentlichungstag der Patentschrift: **17.01.90**

(51) Int. Cl.⁴: **A 01 N 25/32, A 01 N 47/36**

(21) Anmeldenummer: **84810170.5**

(22) Anmeldetag: **06.04.84**

(54) **Herbizides Mittel.**

(30) Priorität: **12.04.83 CH 1953/83**
**10.11.83 CH 6067/83**

(43) Veröffentlichungstag der Anmeldung:
**17.10.84 Patentblatt 84/42**

(45) Bekanntmachung des Hinweises auf die Patenterteilung:
**17.01.90 Patentblatt 90/03**

(84) Bennante Vertragsstaaten:
**BE CH DE FR GB IT LI NL**

(56) Entgegenhaltungen:
**EP-A-0 011 047**
**EP-A-0 089 313**
**US-A-4 343 649**

**WEED SCIENCE, Band 32, Nr. 1, Januar 1984, Seiten 51-58, Champaign, Illinois, US; K.K. HATZIOS: "Interactions between selected herbicides and protectants on corn (Zea mays)"**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Bellucci, Sergio, Dr.**
**Kapellstrasse 121**
**CH-4323 Wallbach (CH)**
Erfinder: **Gerber, Hans-Rudolf, Dr.**
**Blözenweg 49**
**CH-4133 Pratteln (CH)**

**EP 0 122 231 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die vorliegende Erfindung betrifft ein herbizides Mittel, das neben einem herbizid wirksamen Sulfonylharnstoff einen antidotisch wirksamen Oximäther enthält, die Verwendung dieses Mittels zur selektiven Unkrautbekämpfung in Pflanzenkulturen, sowie die Verwendung von Oximäthern als Antidote.

Sulfonylharnstoffe als herbizide Mittel für Pflanzenkulturen sind z. B. aus in den US-Patentschriften Nr. 4 127 405, 4 169 719, 4 238 621, in der EP-A-84 020 und aus den Südafrikanischen Patentschriften Nr. 4874/81 und 127/83 bekannt. Die hervorstechende Eigenschaft der Sulfonylharnstoff-Herbizide ist gegenüber anderen Herbiziden ihre starke Wirksamkeit. Der verhältnismässig niedrige Wirkstoffeinsatz bringt bei der Verwendung der Sulfonylharnstoff-Herbizide neben den preislichen und ökologischen Vorteilen die erhöhte Gefahr einer die Kulturpflanzen schädigenden Überdosierung mit sich. Die schädigende Nebenwirkung der Sulfonylharnstoff-Herbizide kann auch in Abhängigkeit von klimatischen Verhältnissen, vom Wetter und von der Vorbehandlung des Bodens auftreten.

Nach Erkenntnis dieses Problems wurde nach Antidoten gesucht, welche die Kulturpflanzen bei der Verwendung von Sulfonylharnstoff-Herbiziden gegen die erwähnte schädigende Wirkung schützen, ohne dabei die herbizide Wirksamkeit zu vermindern. Als solche Antidoten werden in der US-Patentschrift Nr. 4,343,649 das 1,8-Naphthalindicarbonsäureanhydrid, das N,N-Diallyl-2,2-dichloracetamid und das α-(Cyanmethoxyimino)benzacetonitril beschrieben. Diese Antidoten werden als herbizide Mittel, zusammen mit einzelnen herbizid wirksamen Sulfonylharnstoffen, verwendet.

Weiterhin ist aus der nicht vorveröffentlichten EP-A-0 089 313 bekannt geworden, dass bestimmte fluoralkylsubstituierte Oximether ebenfalls als Antidote für bestimmte Sulfonylharnstoff-Herbizide geeignet sind.

Ziel der vorliegenden Erfindung war geeignete Antidoten gegen die pflanzenschädigende Nebenwirkung herbizid wirksamer Sulfonylharnstoffe zu finden.

Es wurde gefunden, dass die Kulturpflanzen schädigende Nebenwirkung herbizid wirksame Sulfonylharnstoffe der allgemeinen Formel I mit Hilfe von Oximäthern der allgemeinen Formel II als Antidoten beseitigt oder wesentlich herabgesetzt werden kann.

Die Sulfonylharnstoffe entsprechen der allgemeinen Formel I

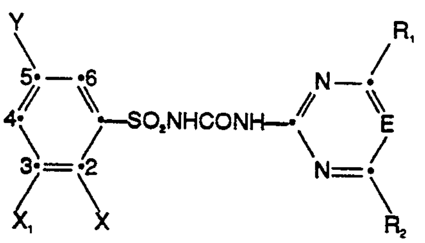

(I)

worin X Halogen, $C_1$–$C_3$ Halogenalkenyl, $C_1$–$C_3$ Alkoxycarbonyl, $C_3$–$C_4$ Alkenyloxy, $C_1$–$C_3$ Halogenalkoxy, $C_1$–$C_3$ Halogenalkylthio, $C_1$–$C_3$ Alkoxy-$C_1$–$C_2$-alkoxy oder Nitro,

$X_1$ Wasserstoff oder mit X zusammen ein Brückenglied 2–O–$CH_2CH_2$–3, 2–OCH(–$CH_3$)–$CH_2$– oder 2–O–$SO_2$CH(–$CH_3$)–$CH_2$–3,

Y Wasserstoff oder Halogen

E Stickstoff –N= oder Methin –CH=,

$R_1$ Halogen, $C_1$–$C_3$ Alkyl, $C_1$–$C_3$ Alkoxy, $C_1$–$C_4$ Halogenalkoxy, Cyclopropyl und

$R_2$ $C_1$–$C_3$ Alkyl, $C_1$–$C_3$ Alkoxy, $C_1$–$C_4$ Halogenalkoxy, Cyclopropyl oder Dimethylamino bedeuten.

Verbindungen, worin Y = H ist, werden dabei bevorzugt.

- Unter Halogen kann z. B. Fluor, Chlor und Brom, insbesondere aber Chlor verstanden werden.
- Unter Halogenalkenyl kann z. B. Halogenäthenyl, Halogenpropenyl und bevorzugt 3,3,3-Trifluorpropenyl verstanden werden.
- Unter Alkoxycarbonyl kann z. B. Methoxy, Äthoxy, Propoxy oder Isopropoxycarbonyl und bevorzugt Methoxycarbonyl verstanden werden.
- Unter Alkenyloxy kann z. B. Allyloxy, Propenyloxy, Buten-2-yl-oxy, Buten-3-yl-oxy, 1-Methyl-alkyloxy, 2-Methylalkyloxy, 1-Methylpropenyloxy und 3-Methyl-propenyloxy, insbesondere aber Allyloxy und Buten-2-yl-oxy verstanden werden.

- Unter Halogenalkoxy kann z. B. Halogenmethoxy, Halogenäthoxy, Halogenpropoxy und Halogenisopropoxy, bevorzugt aber Chlormethoxy, Chloräthoxy, Fluormethoxy, Fluoräthoxy, insbesondere bevorzugt als X 2-Chloräthoxy und Pentafluoräthoxy, als $R_1$ Difluormethoxy verstanden werden.
- Unter Alkoxy-alkoxy kann z. B. Methoxy-methoxy, 2-Methoxy-äthoxy, Äthoxy-methoxy, 2-Äthoxy-äthoxy, n-Propoxymethoxy, Isopropoxy-methoxy, 2-n-Propoxy-äthoxy, 2-Isopropoxy-äthoxy, insbesondere aber 2-Methoxy-äthoxy verstanden werden.
- Unter Y kann z. B. Wasserstoff oder Halogen, wie Fluor, Chlor, Brom, insbesondere Wasserstoff oder Chlor verstanden werden.
- Unter Alkyl kann z. B. Methyl, Äthyl, n-Propyl, i-Propyl, bevorzugt aber Methyl verstanden werden.
- Unter Alkoxy kann z. B. Methoxy, Äthoxy, n-Propoxy, i-Propoxy, bevorzugt aber Methoxy und Äthoxy verstanden werden.

Als herbizid besonders wirksame Sulfonylharnstoffe erweisen sich die Verbindungen der Formel I, worin Y = H ist.

Folgende Sulfonylharnstoffe werden als Herbizide insbesondere bevorzugt:

N-[2-(2'-Chloräthoxy)-phenyl-sulfonyl]-N'-(4-methyl-6-methoxytriazin-2-yl)-harnstoff, N-[2-(2'-Methoxyäthoxy)-phenylsulfonyl]-N'-(4-methyl-6-methoxy-triazin-2-yl)-harnstoff, N-[2-(2-Butenyloxy)-phenyl-sulfonyl]-N'-(4-methyl-6-methoxy-triazin-2-yl)-harnstoff, N-[2-(3-Trifluor-propen-1-yl)-phenyl-sulfonyl]-N'-(4-methyl-6-methoxy-triazin-2-yl)-harnstoff, N-(2,5-Dichlorphenyl-sulfonyl)-N'(4-methyl-6-methoxypyrimidin-2-yl)-harnstoff, N-(2-Methoxycarbonyl-phenyl-sulfonyl)-N'-(4-methyl-6-difluormethoxy-pyrimidin-2-yl)-harnstoff, N-(2-Pentafluoräthoxyphenyl-sulfonyl)-N'-(4,6-dimethoxy-triazin-2-yl)-harnstoff, N-(2-Chlorphenyl-sulfonyl)-N'-(4-methyl-6-methoxy-triazin-2-yl)-harnstoff, N-(2-Methoxycarbonyl-phenyl-sulfonyl)-N'-(4,6-dimethyl-pyrimidin-2-yl)-harnstoff, N-(2-Allyloxy-phenyl-sulfonyl)-N'-(4-methyl-6-äthoxy-triazin-2-yl)-harnstoff N-(2-Nitrophenyl-sulfonyl)-N'-(4-methyl-6-difluormethoxy-pyrimidin-2-yl)-harnstoff und N-(2-Methoxycarbonyl-phenyl-sulfonyl)-N'-(4methyl-6-methoxy-triazin-2-yl)-harnstoff, N-(2-Difluormethoxyphenyl-sulfonyl)-N'-(4-methyl-6-methoxy-pyrimidin-2-yl)-harnstoff, N-(2-Methoxyäthoxyphenyl-sulfonyl)-N'-[4-methoxy-6-(2',2',2'-trifluoräthoxy)-1,3,5-triazin-2-yl-3-harnstoff, N-(2-Methoxycarbonyl-phenyl-sulfonyl)-N'-(4-cyclopropyl-6-methoxy-1,3,5-triazin-2-yl]harnstoff, N-(2-Difluormethoxyphenylsulfonyl)-N'-(4-cyclopropyl-6-methoxy-1,3,5-triazin-2-yl)-harnstoff, N-[2-(3',3',3'-trifluorprop-1-en-1-yl)-phenyl-sulfonyl]-N'-(4-methoxy-6-methyl-1,3,5-triazin-2-yl)-harnstoff, N-(2-Methoxycarbonylphenyl-sulfonyl)-N'-(2,4-difluormethoxy-pyrimidin-2-yl)-harnstoff, N-(2-Difluormethoxyphenyl-sulfonyl)-N'-(4-dimethylamino-6-methoxy-1,3,5-triazin-2-yl)-harnstoff, N-[2-(1',2'-Dichlorvinyloxy)-phenyl-sulfonyl]-N'-(4-methoxy-6-methyl-1,3,5-triazin-1-yl)-harnstoff, N-(2,2-Dioxo-3-methyl-1-oxa2-thia-1,2,3,4-tetrahydro-naphthalen-8-yl)-N'-(4-methoxy-6-methyl-1,3,5-triazin-2-yl)-harnstof, N-(2,2-Dioxo-3-methyl-1-ox a-2-thia-1,2,3,4-tetrahydro-naphthalen-8-yl)-N'-(4-methoxy-6-methyl-pyrimidin-2-yl)-harnstoff, N-(2-Methoxycarbonylphenyl-sulfonyl)-N'-(4,6-dimethoxypyrimidin-2-yl)-harnstoff, N-(2-Methoxycarbonylphenyl-sulfonyl)-N'-(4-methoxy-6-methylpyrimidin-2-yl)-harnstoff, N-(2-Äthoxyphenyl-sulfonyl)-N'-(4-difluormethoxy-6-methoxy-pyrimidin-2-yl)-harnstoff, N-(2-Methoxyäthoxyphenyl-sulfonyl)-N'-(4,6-dimethoxy-triazin-2-yl)-harnstoff, N-(2-Äthoxyphenyl-sulfonyl-N'-(4chlor-6-methoxypyridin-2-yl)-harnstoff, N-(2-Äthoxyphenylsulfonyl)-N'-(4-difluormethoxy-6-methylpyrimidin-2-yl)-harnstoff, N-[2-(2-Chloräthylmercapto)phenyl-sulfonyl]-N'-(4-methoxy-6-methyl-1,3,5-triazin-2-yl)-harnstoff.

Als gegen die pflanzenschädigende Nebenwirkung herbizid wirksamer Sulfonylharnstoffe werden gemäss vorliegender Erfindung Oximäther der Formel II

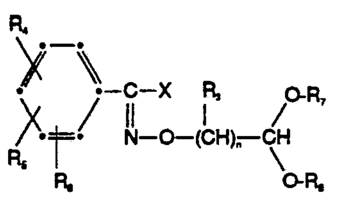

(II)

worin n 1 oder 2, $R_3$ und $R_4$ je Wasserstoff oder $C_1$–$C_4$–Alkyl, $R_5$ und $R_6$ je Wasserstoff, Halogen, $C_1$–$C_4$–Alkyl, $C_1$–$C_4$–Halogenalkyl, $C_1$–$C_4$–Alkoxy, $C_1$–$C_4$–Halogenalkoxy, $C_1$–$C_4$–Alkylthio, $C_1$–$C_4$–Halogenalkylthio, $C_1$–$C_4$–Alkylsulfinyl, $C_1$–$C_4$–Alkylsulfonyl, $C_1$–$C_4$-Halogenalkylsulfinyl, $C_1$–$C_4$–Halogenalkylsulfonyl oder Nitro, $R_7$ und $R_8$ einzeln je $C_1$–$C_4$–Alkyl, $C_3$–$C_4$–Alkenyl oder zusammen eine gegebenenfalls durch eine oder mehrere Alkylgruppen substituierte 1,2-Äthylen- oder 1,3-Propylengruppe und X eine Cyano-Gruppe bedeutet, vorgeschlagen.

Die Reste $R_3$ - $R_8$, sowie die in den Resten $R_3$ - $R_8$ vorkommenden $C_1$–$C_4$ Alkylgruppen können geradkettig oder verzweigt sein und bedeuten im einzelnen Methyl, Äthyl, n-Propyl, Isopropyl, n-Butyl, sek.-Butyl, Isobutyl und tert.-Butyl. Unter diesen Alkylgruppen sind $C_1$–$C_2$ Alkylgruppen bevorzugt und $R_1$ bedeutet als Alkylrest vorzugsweise Methyl. Diese Beschreibung für Alkylgruppen gilt auch für die Alkylteile anderer Substituentengruppen gemäss der Definition der Formel II. Alkenyl kann beispielsweise Allyl, Propenyl, i-Propenyl, Buten-2-yl, 2-Methyl-propen-2-yl und 1-Methyl-propen-2-yl bedeuten und ist vorzugsweise eine Allylgruppe.

Unter Halogen sind z. B. Fluor, Chlor, Brom und Jod, insbesondere aber Fluor oder Chlor zu verstehen.

Die Verbindungen der Formel II, in welchen $R_7$ und $R_8$ zusammen eine gegebenenfalls durch eine oder mehrere Alkylgruppen substituierte 1,2-Äthylen- oder 1,3-Propylengruppe bilden, stellen 1,3-Dioxolan- bzw. 1,3-Dioxanderivate dar und entsprechen der Formel IIa

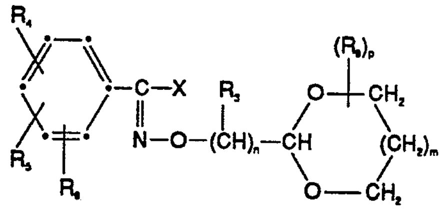

(IIa)

worin n, $R_3$, $R_4$, $R_5$, $R_6$ und X die unter Formel II angegebene Bedeutung haben, m 0 oder 1, p 0 - 4 und $R_9$ eine $C_1$–$C_3$ Alkylgruppe, vorzugsweise Methyl, bedeutet. Von den Verbindungen der Formel IIa sind diejenigen bevorzugt, worin m 0 bedeutet.

Unter den Verbindungen der Formel II sind folgende Untergruppen bevorzugt:

a) Verbindungen, worin n für 1 steht, $R_3$, $R_4$ und $R_6$ Wasserstoff darstellen, $R_5$ Wasserstoff, Halogen, Methyl, Difluormethyl, Trifluormethyl, Chlordifluormethyl, Methoxy, Difluormethoxy, Trifluormethoxy, Chlordifluormethoxy, Tetrafluoräthyl, Tetrafluoräthoxy oder Trifluormethylsulfonyl bedeutet, X eine Cyano-Gruppe ist und $R_7$ und $R_8$ die unter Formel II angegebenen Bedeutungen haben,

b) Verbindungen, worin n für 1 steht, $R_3$, $R_4$ und $R_6$ Wasserstoff darstellen, $R_5$ Wasserstoff, Fluor, Chlor, Methyl, Difluormethyl, Trifluormethyl, Chlordifluormethyl, Methoxy, Difluormethoxy, Trifluormethoxy, Chlordifluormethoxy, Tetrafluoräthyl, Tetrafluoräthoxy, Tetrafluormethylsulfonyl bedeutet, X eine Cyano-Gruppe ist und $R_7$ und $R_8$ zusammen eine gegebenenfalls durch 1 - 4 Methylgruppen substituierte 1,2-Äthylengruppe bedeuten,

c) Verbindungen, worin n für 1 steht, $R_3$, $R_4$ und $R_6$ Wasserstoff darstellen, $R_5$ Wasserstoff, Fluor, Chlor, Trifluormethyl oder Trifluormethoxy bedeutet, X eine Cyano-Gruppe, Chlordifluormethyl oder Pentafluoräthyl ist und $R_7$ und $R_8$ zusammen eine gegebenenfalls durch 1 - 4 Methylgruppen substituierte 1,2-Äthylengruppe darstellen,

d) Verbindungen, worin n für 1 steht, $R_3$, $R_4$ und $R_6$ Wasserstoff darstellen, $R_5$ Fluor oder Chlor bedeutet, X eine Cyano-Gruppe ist und $R_7$ und $R_8$ zusammen eine gegebenenfalls durch 1 - 4 Methylgruppen substituierte 1,2-Äthylengruppe bedeuten, und

e) Verbindungen, worin n für 1 steht, $R_3$, $R_4$ und $R_6$ Wasserstoff darstellen, $R_5$ in der 3-Stellung steht und Trifluormethyl oder Nitro bedeutet, X eine Cyano-Gruppe ist und $R_7$ und $R_8$ zusammen eine gegebenenfalls durch 1 - 4 Methylgruppen substituierte 1,2-Äthylengruppe bedeuten.

f) Verbindungen, worin n für 1 steht, $R_3$, $R_4$ und $R_6$ Wasserstoff darstellen, $R_5$ Wasserstoff oder Fluor bedeutet, X eine Cyano-Gruppe ist und $R_7$ und $R_8$ zusammen eine gegebenenfalls durch 1 - 4 Methylgruppen substituierte 1,2-Äthylengruppe bedeuten.

g) Verbindungen, worin n für 1 steht, $R_3$, $R_4$ und $R_6$ Wasserstoff darstellen, $R_5$ Wasserstoff oder Fluor bedeutet, X eine Cyano-Gruppe ist und $R_7$ und $R_8$ zusammen eine 1,2-Äthylengruppe bedeuten.

h) Verbindungen, worin n für 1 steht, $R_3$, $R_4$ und $R_6$ Wasserstoff darstellen, $R_5$ Fluor bedeutet, X eine Cyano-Gruppe ist und $R_7$ und $R_8$ zusammen eine 1,2-Äthylengruppe bedeuten.

Bevorzugte Einzelverbindungen sind vor allem:

α-(1,3-Dioxolan-2-ylmethoximino)-benzylcyanid,
α-(2,2-Dimethoxyäthoximino)-benzylcyanid,
α-(1,3-Dioxan-2-yl-methoximino)-benzylcyanid,
α-(5,5-Dimethyl-1,3-dioxan-2-yl-methoximino)-benzylcyani
d, α-(2,2-Dimethoxyäthoximino)-3,4-dichlorbenzylcyanid,
α-(1,3-Dioxolan-2-yl-äthoximino)-3,4-dichlorbenzylcyanid,
α-(2,2-Diäthoxyäthoximino)-4-methoxybenzylcyanid.

Die Oximäther der Formel II sind zum Schützen von Kulturpflanzen gegen die schädigende Wirkung von Sulfonylharnstoffen geeignet. Die Oximäther der Formel II können daher in Bezug auf ihre Anwendung in Kombination mit den vorgenannten Herbiziden als Gegenmittel oder "Antidotes" oder auch als "Safener" bezeichnet werden.

Von den Verbindungen der Formel II existieren verschiedene stereoisomere Formen, nämlich die syn- und anti-Formen der zugrundeliegenden Oxime und die einzelnen Enantiomeren derjenigen Verbindungen der Formel II, die ein Asymmetriezentrum besitzen. Solche Asymmetriezentren liegen dann vor, wenn $R_3$ verschieden von Wasserstoff ist oder wenn ungleiche Reste $R_7$ und $R_8$ vorliegen beziehungsweise, wenn die durch die Reste $R_7$ und $R_8$ gebildete 1,2-Äthylen- oder 1,3-Propylengruppe asymmetrisch substituiert ist. Diese stereoisomeren Formen sind ebenfalls Gegenstand der Erfindung.

Ein solches Gegenmittel oder Antidote der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidote kann daher grundsätzlich unabhängig vom Zeitpunkt der Applikation der phytotoxischen Chemikalien erfolgen. Die Behandlung der Pflanzen kann jedoch durch gleichzeitige Applikation von phythotoxischer Chemikalien und Gegenmittel (Tankmischung) erfolgen. Die preemergente Behandlung schliesst sowohl die Behandlung der Anbaufläche vor der Aussaat (ppi = pre plant incorporation) als auch die Behandlung der angesäten, aber noch nicht bewachsenen Anbauflächen ein.

Die Aufwandmengen des Gegenmittels im Verhältnis zum Herbizid richten sich weitgehend nach der Anwendungsart. Bei einer Feldbehandlung, bei der Herbizid und Gegenmittel entweder gleichzeitig (Tankmischung) oder separat appliziert werden, liegt das Verhältnis der Mengen von Gegenmittel zu Herbizid im Bereich von 1 : 10 bis 10 : 1.

In der Regel wird bei einem Mengenverhältnis von Gegenmittel zu Herbizid von 1 : 3 bis 3 : 1 die volle Schutzwirkung erreicht. Man ermittelt von Fall zu Fall, d.h. je nach verwendetem Herbizid-Typ, welches Verhältnis in bezug auf optimale Wirkung bei der speziellen Kulturpflanze das geeignetste ist. Bei der Samenbeizung und ähnlichen gezielten Schutzmassnahmen werden jedoch weit geringere Mengen Gegenmittel im Vergleich mit den später pro Hektar Anbaufläche verwendeten Mengen an Herbizid benötigt. Im allgemeinen werden bei der Samenbeizung pro kg Samen 0,5 - 50 g Gegenmittel benötigt. In der Regel wird mit 0,5 - 4 g Gegenmittel pro kg Samen bereits die volle Schutzwirkung erreicht. Falls das Gegenmittel kurz vor der Aussaat durch Samenquellung appliziert werden soll, so werden zweckmässig Lösungen des Gegenmittels, welche den Wirkstoff in einer Konzentration von 1 - 10'000 ppm enthalten, verwendet. In der Regel wird mit Konzentrationen des Gegenmittels von 10 - 1000 ppm die volle Schutzwirkung erreicht.

In der Regel liegt zwischen protektiven Massnahmen, wie Samenbeizung und Behandlung von Stecklingen mit einem Gegenmittel der Formel II und der möglichen späteren Feldbehandlung mit Agrarchemikalien ein längerer Zeitraum. Vorbehandeltes Saat- und Pflanzengut kann später in Landwirtschaft, Gartenbau und Forstwirtschaft mit unterschiedlichen Chemikalien in Berührung kommen.

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Öle, Zucker, Stärke, Eiweiss usw., produzieren und zu diesem Zweck angebaut werden. Zu diesen Pflanzen gehören beispielsweise Getreidearten, wie Weizen, Roggen, Gerste und Hafer, daneben vor allem Reis, Sorghum, Mais, Baumwolle, Zuckerrüben, Zuckerrohr, Soja, Bohnen, und Erbsen.

Das Gegenmittel kann überall dort eingesetzt werden, wo eine Kulturpflanze der vorgenannten Art vor der schädlichen Wirkung von Sulfonylharnstoffen der Formel I geschützt werden soll.

Zur Beizung der Samen der Kulturpflanze werden die Samen mit dem Antidot der Formel II im gewünschten Mengenverhältnis gründlich vermischt.

Zur Verwendung werden die Verbindungen der Formel I und II in unveränderter Form oder vorzugsweise zusammen mit den in der Formulierungstechnik üblichen Hilfsmitteln eingesetzt und daher z. B. zu Emulsionskonzentraten, direkt versprühbaren und verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und II und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonid oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I und II nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen sind z. B. die Alkali-, Erdalkali- oder gegebenenfalls substituierten Ammoniumsalze von höheren

Fettsäuren ($C_{10}$–$C_{22}$), wie z. B. die Na- oder K-Salze der Öl- oder Stearinsäure, oder von natürlichen Fettsäuregemischen, die z. B. aus Kokosnuss- oder Talgöl gewonnen werden können. Ferner sind auch die Fettsäuremethyltaurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxyd-Addukten. Die sulfonierten Benzimidazolderivate enthalten vorzugsweise 2 Sulfonsäuregruppen und einen Fettsäurerest mit 8 - 22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Äthylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nicht ionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual"
Mc Publishing Corp., Ringdgewood, New Jersey, 1979
Sisley and Wood, "Encyclopedia of Surface Active Agents",
Chemical Publishing Co., Inc. Neu York, 1964

Diese Zubereitungen enthalten in der Regel 0,1 bis 99 %, insbesondere 0,1 bis 95 %, Wirkstoff, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,1 bis 10 kg AS/ha, vorzugsweise 0,25 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Die Herstellung der Wirksubstanzen der Formel I und II kann nach bekannten Methoden erfolgen.

Verbindungen der Formel I werden in einem inerten, organischen Lösungsmittel hergestellt.

Nach einem ersten Verfahren werden die Verbindungen der Formel I erhalten, indem man ein Phenylsulfonamid der Formel III

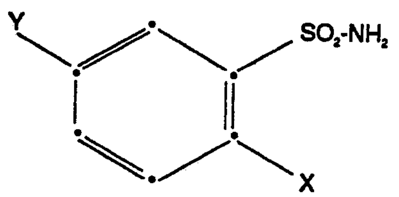

(III),

worin X und Y die unter Formel I gegebene Bedeutung haben, in Gegenwart einer Base mit einem N-Pyrimidinyl- oder -Triazinylcarbamat der Formel IV

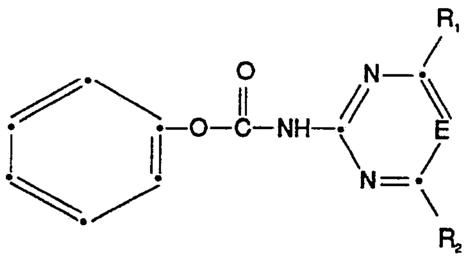

(IV),

worin E, $R_1$, $R_2$ die unter Formel I gegebene Bedeutung haben, umsetzt.

Nach einem zweiten Verfahren gelangt man zu Verbindungen der Formel I, indem man ein Phenylsulfonylisocyanat der Formel V

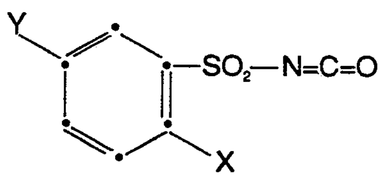

(V),

worin X und Y die unter Formel I gegebene Bedeutung haben, gegebenenfalls in Gegenwart einer Base, mit einem Amin der Formel VI

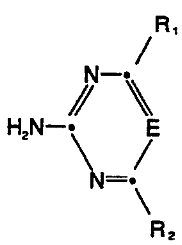

(VI),

worin E, $R_1$ und $R_2$ die unter Formel I gegebene Bedeutung haben, umsetzt.

Nach einem weiteren Verfahren werden Verbindungen der Formel I hergestellt, indem man ein Sulfonamid der oben angegebenen Formel III gegebenenfalls in Gegenwart einer Base mit einem Isocyanat oder Isothiocyanat der Formel VII

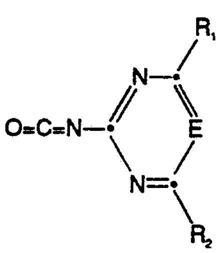

(VII)

worin E, $R_1$ und $R_2$ die unter Formel I gegebene Bedeutung haben, umsetzt.

Schliesslich kann man die Verbindungen der Formel I auch erhalten, indem man ein N-Phenylsulfonylcarbamat der Formel VIII

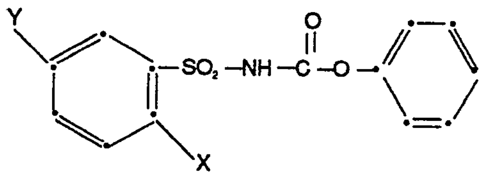

(VIII),

worin X und Y die unter Formel I gegebene Bedeutung haben, mit einem Amin der oben angegebenen Formel VI umsetzt.

Die erhaltenen Harnstoffe der Formel I können gewünschtenfalls mittels Aminen, Alkalimetall- oder Erdalkalimetallhydroxiden oder quaternären Ammoniumbasen in basische Additionsalze übergeführt werden. Dieses geschieht beispielsweise durch Umsetzen mit der äquimolaren Menge Base und Verdampfen des Lösungsmittels.

Die Ausgangsstoffe der Formeln III, V und VIII können nach folgenden Methoden hergestellt werden:

Die als Zwischenprodukte verwendeten Sulfonamide der Formel III werden aus den entsprechenden Anilinen durch Diazotierung und Austausch der Diazogruppe mit Schwefeldioxid in Gegenwart eines Katalysators wie Kupfer-I-chlorid in Salzsäure oder Essigsäure und Umsetzen des entstandenen Phenylsulfonylchlorids mit Ammoniumhydroxid-Lösung erhalten.

Die Verbindungen der Formel III können auch durch Sauerstoff-Alkylierung resp. Alkenylierung von Hydroxyphenyl-sulfonamiden mit den entsprechenden Halogeniden resp. Schwefelsäureestern erhalten werden.

Die Alkoxyphenylsulfonamide wiederum können aus den entsprechenden Alkoxyaniliden, wie bereits erwähnt oder durch Chlorsulfonylierung von Alkoxybenzolen und Umsatz der erhaltenen Phenylsulfonylchloriden mit Ammoniumhydroxid-Lösung gewonnen werden. Solche Reaktionen sind aus J. Am. Chem. Soc. *62,* 603 (1940) bekannt geworden.

Die Phenylsulfonylisocyanate der Formel V können durch Umsetzungen der Sulfonamide der Formel III mit Phosgen in Anwesenheit von Butylisocyanat in einem chlorierten Kohlenwasserstoff als Lösungsmittel, bei Rückflusstemperatur erhalten werden. Ähnliche Darstellungen sind in "Newer Methods of Preparative Organic Chemistry" Band VI, 223 - 241, Academic Press New York und London, beschrieben.

Die N-Phenylsulfonylcarbamate der Formel VII werden durch Umsetzung der Sulfonamide der Formel II mit Diphenylcarbamat in Gegenwart einer Base erhalten. Ähnliche Verfahren sind in der japanischen Patentschrift 61 169 erwähnt.

Die Ausgangsmaterialien der Formeln IV, VI und VII sind bekannt oder können nach bekannten Methoden hergestellt werden.

Durch Umsetzung von Aminen der Formel VI mit Oxalylchlorid in chlorierten Kohlenwasserstoffen als Lösungsmittel, lassen sich Isocyanate der Formel VII herstellen. Amine der Formel VI sind bekannt und zum Teil im Handel erhältlich oder sie können nach bekannten Methoden hergestellt werden, siehe "The Chemistry of Heterocyclic Compounds" Band XIV, Interscience Publishers, New York, London.

Diese Umsetzungen zu Verbindungen der Formel I werden vorteilhafterweise in aprotischen, inerten, organischen Lösungsmitteln vorgenommen, wie Methylenchlorid, Tetrahydrofuran, Acetonitril, Dioxan, Toluol.

Die Reaktionstemperaturen liegen vorzugsweise zwischen -20° und +120°C. Die Umsetzungen verlaufen im allgemeinen leicht exotherm und können bei Raumtemperatur durchgeführt werden. Zwecks Abkürzung der Reaktionszeit oder auch zum Einleiten der Umsetzung wird zweckdienlich für kurze Zeit bis zum Siedepunkt des Reaktionsgemisches aufgewärmt. Die Reaktionszeiten können ebenfalls durch Zugabe einiger Tropfen Base oder Isocyanat als Reaktionskatalysator verkürzt werden.

Die Endprodukte können durch Einengen und/oder Verdampfen des Lösungsmittels isoliert und durch Umkristallisation oder Zerreiben des festen Rückstandes in Lösungsmitteln in denen sie sich nicht gut lösen, wie Äther, aromatischen Kohlenwasserstoffen oder chlorierten Kohlenwasserstoffen gereinigt werden.

Die Oximäther der Formel II werden hergestellt, indem man ein Salz eines Oxims der Formel IX

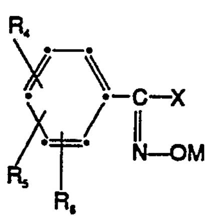

(IX)

worin M ein Alkalimetall- oder Erdalkalimetallkation darstellt und $R_4$, $R_5$, $R_6$ und X die unter Formel II gegebene Bedeutung haben, mit einem 2-Halogenalkylacetal der Formel X

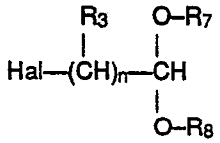

(X)

worin Hal ein Halogenatom, insbesondere ein Chloratom oder ein Bromatom darstellt und n, $R_3$, $R_7$ und $R_8$ die unter Formel II gegebene Bedeutung haben, umsetzt. Als Salze eines Oxims der Formel IX sind insbesondere die Natrium- und Kaliumsalze geeignet. Die Umsetzung des Oxims der Formel IX mit dem Halogenacetal der Formel X wird vorteilhaft in einem inerten organischen Lösungsmittel durchgeführt. Besonders geeignet sind polare Lösungsmittel, wie Acetonitril, Dimethylformamid und Dimethylsulfoxid, Dimethylacetamid, Methylpyrrolidon oder Tetramethylharnstoff. Die Reaktanten werden in der Regel in äquimolarer Menge eingesetzt. Es kann jedoch auch zum vollständigen Ablauf der Reaktion der eine oder der andere Reaktionspartner im Überschuss eingesetzt werden. Die Umsetzung wird vorteilhaft bei erhöhter Temperatur, vorzugsweise zwischen 50 und 90°C, durchgeführt. Die Reaktion kann auch in einem anderen Lösungsmittel durchgeführt werden, wie beispielsweise Toluol, allerdings bei höherer Temperatur und längerer Wirkungsdauer.

Die Oxime der Formel IX, in welchen X eine Cyano-Gruppe bedeutet können durch Umsetzung eines Benzylcyanids der Formel XII

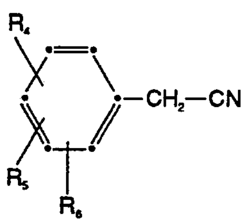

(XII)

worin $R_4$, $R_5$ und $R_6$ die unter Formel II gegebene Bedeutung haben, mit Butylnitril in Gegenwart einer Base, z. B. Natriummethylat oder Natriumäthylat dargestellt werden. (S. J. Org. Chem. 192 - 193/1937/, oder USP-3 483 246 oder DE-OS-2 150 399).

Auf diesem Wege können
das 1-Hydroximino-ortho-fluor-benzylcyanid,
das 1-Hydroximino-meta-fluor-benzylcyanid und
das 1-Hydroximino-para-fluor-benzylcyanid synthetisiert werden.

Die entsprechenden o-, m- und p-Fluor-benzylcyanide werden im Handel angeboten.

Die kernfluorierten Benzylcyanide ihrerseits sind aus den entsprechend kernsubstituierten Benzylchloriden durch Umsetzung mit Kalium- oder Natriumcyanid herstellbar. Das 4-Fluorbenzylcyanid kann z. B. durch Chlormethylierung des Fluorbenzols hergestellt werden /B1. [5] *20* C 45 (1953)/. Das 2- bzw. 3-Fluorbenzylchlorid wird durch Seitenkettenchlorierung des aus 2- bzw. 3-Aminotoluol durch Sandmayer-Reaktion erhältlichen 2- bzw. 3-Fluortoluol hergestellt.

Die chemisch einfacheren Oxime sind im Handel erhältlich, das 2-Hydroximino-acetonitril ist ein bekanntes Zwischenprodukt.

Die Halogenalkyl-acetale der Formel X können durch Kondensation der entsprechenden Alkohole und Halogenaldehyde dargestellt werden.

Die chemisch einfacheren Verbindungen, z. B. das 2-Brommethyl-1,3-dioxolan und das 2-Chlormethyl-1,3-dioxolan sind als Zwischenprodukte bekannt.

**Beispiel 1**

Herstellung von N-(1,3-Dioxolan-2-yl-methoxy)-imino-ortho-fluor-phenylacetonitril

In einem 100 ml Rundkolben werden 2,3 g (0,1 Mol) metallisches Natrium in 50 ml absolutem Äthanol gelöst und 18,6 g (0,1 Mol) 1-Hydroximino-ortho-fluor-phenylacetonitril zugegeben. Nach beendigter Zugabe wird zunächst eine halbe Stunde bei Raumtempertur nachgerührt und dann das Lösungsmittel abgedampft. Zu der Lösung des Rückstandes in 75 ml Dimethylsulfoxid werden unter Rühren 18,4 g (0,11 Mol) 2-Brommethyl-1,3-dioxolan zugetropft und 4 Stunden bei 60 - 70°C Innentemperatur nachgerührt. Danach wird die entstandene Suspension abgekühlt und auf eine Eis-Wasser-Mischung gegossen. Aus der erhaltenen Mischung wird das Reaktionsprodukt durch Extraktion mit Methylenchlorid gewonnen. Der Extrakt wird über Natriumsulfat getrocknet und das Lösungsmittel abgedampft. Als Rohprodukt wird ein kristalliner Niederschlag erhalten, der durch Umkristallisieren aus Äthanol gereinigt wird. Es werden so 14,0 g (56 % der Theorie) N-(1,3-Dioxolan-2-yl-methoxy)-imino-orthofluor-phenylacetonitril erhalten. Schmelzpunkt 46 - 47°C.

In analoger Weise werden ausgehend von 1-Hydroximino-meta-fluorphenylacetonitril, 1-Hydroxyimino-para-phenylacetonitril respektive deren Natriumsalze durch Umsetzung mit 2-Brommethyl-1,3-dioxolan, N-(1,3-Dioxolan-2-yl-methoxy)-imino-meta-fluor-phenylacetonitril und N-(1,3-Dioxolan-2-yl-methoxy)-imino-para-fluoracetonitril vom Schmelzpunkt 68 - 71°C erhalten.

**Beispiel 2**

α-(1,3-Dioxolan-2-ylmethoximino)-benzylcyanid (Z-Form)

15,4 g des Natriumsalzes von α-Phenylacetonitriloxim (Z-Form) werden in 70 ml DMSO gelöst, mit 16,7 g Brommethyldioxolan versetzt und 4 Stunden bei 60°C gerührt. Nun wird mit 150 ml Äther versetzt und dreimal mit je 100 ml $H_2O$ gewaschen. Die Ätherphase wird mit $MgSO_4$ getrocknet und eingedampft. Das Rohprodukt (17,8 g vom Smp. 67°) wird aus Äther/Hexan 1 : 3 kristallisiert und liefert 16,7 g α-(1,3-Dioxolan-2-ylmethoximino)-benzylcyanid (Z-Form) vom Smp. 76°.

**Beispiel 3**

**Formulierungsbeispiele für Wirkstoffe der Formel II oder Mischungen dieser Wirkstoffe mit Herbiziden der Formel I**

| **a) Spritzpulver** | **a)** | **b)** | **c)** |
|---|---|---|---|
| Wirkstoff der Formel II oder Mischung mit einem Herbizid der Formel I | 20 % | 60 % | 0,5 % |
| Na-Ligninsulfonat | 5 % | 5 % | 5 % |
| Na-Laurylsulfat | 3 % | - | - |
| Na-Diisobutylnaphthalinsulfonat | - | 6 % | 6 % |
| Octylphenolpolyäthylenglykoläther (7-8 Mol AeO) | - | 2 % | 2 % |
| Hochdisperse Kieselsäure | 5 % | 27 % | 27 % |
| Kaolin | 67 % | - | - |
| Natriumchlorid | - | - | 59,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| **b) Emulsions-Konzentrat** | **a)** | **b)** |
|---|---|---|
| Wirkstoff der Formel II oder Mischung mit einem Herbizid der Formel I | 10 % | 1 % |
| Octylphenolpolyäthylenglykoläther (4-5 Mol AeO) | 3 % | 3 % |
| Ca-Dodecylbenzolsulfonat | 3 % | 3 % |
| Ricinusölpolyglykoläther (36 Mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

| **c) Stäubemittel** | **a)** | **b)** |
|---|---|---|
| Wirkstoff der Formel II oder Mischung mit einem Herbizid der Formel I | 0,1 % | 1 % |
| Talkum | 99,9 % | - |
| Kaolin | - | 99 % |

Man erhält anwendungsfertige Stäubemittel, indem der Wirkstoff mit dem Träger vermischt und auf einer geeigneten Mühle vermahlen wird.

| **d) Extruder Granulat** | a) | b) |
|---|---|---|
| Wirkstoff der Formel II oder Mischung mit einem Herbizid der Formel I | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

| **e) Umhüllungs-Granulat** | |
|---|---|
| Wirkstoff der Formel II oder Mischung mit einem Herbizid der Formel I | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| **f) Suspensions-Konzentrat** | a) | b) |
|---|---|---|
| Wirkstoff der Formel II oder Mischung mit einem Herbizid | 40 % | 5 % |
| Äthylenglykol | 10 % | 10 % |
| Nonylphenolpolyäthylenglykoläther (15 Mol AeO) | 6 % | 1 % |
| Na-Ligninsulfonat | 10 % | 5 % |
| Carboxymethylcellulose | 1 % | 1 % |
| 37 %-ige wässrige Formaldehyd-Lösung | 0,2 % | 0,2 % |
| Silikonöl in Form einer 75 %-igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

| **g) Salzlösung** | |
|---|---|
| Wirkstoff der Formel II oder Mischung mit einem Herbizid der Formel I | 5 % |
| Isopropylamin | 1 % |
| Octylphenolpolyäthylenglykoläther (78 Mol AeO) | 3 % |
| Wasser | 91 % |

**Biologische Beispiele**

Die Fähigkeit der Verbindungen der Formel II, Kulturpflanzen vor der phytotoxischen Wirkung starker Herbizide zu schützen, kann aus den folgenden Beispielen ersehen werden. In den Versuchbeschreibungen werden die Verbindungen der Formel II als Antidote (Gegenmittel) bezeichnet.

**Beispiel 4**

**Saatbeizung für Antidot; Herbizid Nachauflauf in Mais**

Maissamen der Sorte "LG 5" werden mit der als Antidot zu prüfenden Substanz in einen Glasbehälter gemischt. Samen und Produkt werden durch Schütteln und Rotation gut zusammengemischt. Töpfe desselben Formats (oberer Ø 11 cm) werden mit Erde gefüllt und die gebeizten Samen werden eingesät. Das Herbizid wird im Nachauflauf (Dreiblattstadium der Pflanze) appliziert. 21 Tage nach der Herbizidapplikation wird die Schutzwirkung des Antidot in Prozent bonitiert. Als Referenzen dienen dabei die mit Herbizid allein behandelten Pflanzen sowie die vollständig unbehandelte Kontrolle.

Das Antidot gewährt eine bedeutende Schutzwirkung:

| | | | | | | | | | |
|---|---|---|---|---|---|---|---|---|---|
| Herbizid: N-[2-(2-Butenyloxy)-phenyl-sulfonyl]-N'-(4-methyl -6-methoxy-triazin-2-yl)-harnstoff kg AS/ha | | 1.5 | | | 1.0 | | | 0.5 | |
| Antidot: α-(1,3-Dioxolan-2-ylmethoximino)-benzylcyanid | 4 | 2 | 1 | 4 | 2 | 1 | 4 | 2 | 1 |

| | | | | | | | | | |
|---|---|---|---|---|---|---|---|---|---|
| (Z-Form) g AS/kg Samen | | | | | | | | | |
| Relative Schutzwirkung in % | 50 | 63 | 50 | 63 | 63 | 63 | 25 | 25 | 25 |

| | | | | | | | | | |
|---|---|---|---|---|---|---|---|---|---|
| Herbizid: N-(2-Methoxycarbonyl-phenylsulfonyl)-N'-(4,6-difluor -methoxy-pyrimidin-2-yl)-harnstoff kg AS/ha | 0.5 | | | 0.25 | | | 0.125 | | |
| Antidot: α-(1,3-Dioxolan-2-ylmethoximino) -benzylcyanid (Z-Form) g AS/kg Samen | 4 | 2 | 1 | 4 | 2 | 1 | 4 | 2 | 1 |
| Relative Schutzwirkung in % | 50 | 63 | 12.5 | 63 | 63 | 50 | 38 | 38 | 38 |

**Beispiel 5**

**Saatbeizung für Antidot; Herbizid Vorauflauf in Mais**

Maissamen der Sorte "LG 5" werden mit der als Antidot zu prüfenden Substanz in einen Glasbehälter gemischt. Samen und Produkt werden durch Schütteln und Rotation gut zusammengemischt. Töpfe desselben Formats (oberer Ø 11 cm) werden mit Erde gefüllt und die gebeizten Samen werden eingesät. Nach dem Bedecken der Samen wird das Herbizid im Vorauflauf appliziert. 14 Tage nach der Herbizidapplikation wird die Schutzwirkung des Antidot in Prozent bonitiert. Als Referenzen dienen dabei die mit Herbizid allein behandelten Pflanzen sowie die vollständig unbehandelte Kontrolle.

Das Resultat zeigt die Schutzwirkung des Antidots:

| | | | | | | | | | |
|---|---|---|---|---|---|---|---|---|---|
| Herbizid: N-[2-(2-Butenyloxy)-phenyl-sulfonyl]-N'(4-methyl-6-methoxy-triazin-2-yl-)-harnstoff kg AS/ha | 1.5 | | | 1.0 | | | 0.5 | | |
| Antidot: α-(1,3-Dioxolan-2-ylmethoximino)-benzylcyanid (Z-Form) g AS/kg Samen | 4 | 2 | 1 | 4 | 2 | 1 | 4 | 2 | 1 |
| Relative Schutzwirkung in % | 25 | 38 | 38 | 25 | 25 | 12.5 | 25 | 12.5 | 12.5 |

| | | | |
|---|---|---|---|
| Herbizid: N-(2-Methoxycarbonyl-phenylsulfonyl)-N'-4,6-difluor-methoxy-pyrimidin-2-yl)-harnstoff kg AS/ha | 0.25 | 0.125 | 0.062 |
| Antidot: α-(1,3-Dioxolan-2-yl-methoximino)-benzylcyanid g AS/kg Samen | 2 | 2 | 2 |
| Relative Schutzwirkung in % | 38 | 38 | 50 |

| | | | | | | |
|---|---|---|---|---|---|---|
| Antidot: α-(1,3-Dioxolan-2-ylmethox-imino)-benzylcyanid (Z-Form) g AS/kg Samen | 2 | 1 | 0.5 | 2 | 1 | 0.5 |
| Herbizid: N-(2-Chlorphenyl-sulfonyl)-N'-(4-methyl-6-methoxy-triazin-2-yl)-harnstoff | 0,062 kg AS/ha | | | 0,031 kg AS/ha | | |
| relative Schutzwirkung: | 12,5 % | 12,5 % | 12,5 % | 12,5 % | 12,5 % | 12,5 % |
| Herbizid: N-[2-(2'-Chloräthoxy)-phenyl-sulfonyl]-N'(4-methyl-6-methoxy-triazin-2-yl)-harnstoff | 0,062 kg AS/ha | | | 0,032 kg AS/ha | | |
| relative Schutzwirkung: | 38 % | 25 % | 12,5 % | 38 % | 38 % | - |
| Herbizid: N-[2-(2'-Methoxyäthoxy)-phenyl-sulfonyl]-N'-(4-methyl-6-methoxy-triazin-2-yl-harnstoff | 0,062 kg AS/ha | | | 0,031 kg AS/ha | | |
| relative Schutzwirkung: | 38 % | 25 % | 12,5 % | 38 % | 25 % | 38 % |

**Beispiel 6**

**Saatbeizung für Antidot; Herbizid Vorauflauf in Gerste**

Gerstensamen werden mit der als Antidot zu prüfenden Substanz in einen Glasbehälter gemischt. Samen und Produkt

werden durch Schütteln und Rotation gut zusammengemischt. Töpfe desselben Formats (oberer Ø 11 cm) werden mit Erde gefüllt und die gebeizten Samen werden eingesät. Nach dem Bedecken der Samen wird das Herbizid im Vorauflauf appliziert. 14 Tage nach der Herbizidapplikation wird die Schutzwirkung des Antidot in Prozent bonitiert. Als Referenzen dienen dabei die mit Herbizid allein behandelten Pflanzen sowie die vollständig unbehandelte Kontrolle.

Das Resultat ist eine erhebliche Schutzwirkung durch das Antidot:

| | | | | | | | | | |
|---|---|---|---|---|---|---|---|---|---|
| Herbizid:<br>N-[2-(2'-Methoxäthoxy)-phenyl-sulfonyl]-N'-(4-methyl-6-methoxytriazin-2-yl)-harnstoff kg AS/ha | 0.125 | | | 0.062 | | | 0.031 | | |
| Antidot:<br>α-(1,3-Dioxolan-2-yl-methoximino)-benzylcyanid (Z-Form) g AS/kg Samen | 2 | 1 | 0.5 | 2 | 1 | 0.5 | 2 | 1 | 0.5 |
| Relative Schutzwirkung in % | 12.5 | 12.5 | 12.5 | 12.5 | 12.5 | 12.5 | 38 | 38 | 38 |

**Beispiel 7**

**Saatbeizung für Antidot; Herbizid Vorauflauf in Sorghum**

Sorghumsamen werden mit der als Antidot zu prüfenden Substanz in einen Glasbehälter gemischt. Samen und Produkt werden durch Schütteln und Rotation gut zusammengemischt. Töpfe desselben Formats (oberer Ø 11 cm) werden mit Erde gefüllt und die gebeizten Samen werden eingesät. Nach dem Bedecken der Samen wird das Herbizid im Vorauflauf appliziert. 14 Tage nach der Herbizidapplikation wird die Schutzwirkung des Antidot in Prozent bonitiert. Als Referenzen dienen dabei die mit Herbizid allein behandelten Pflanzen sowie die vollständig unbehandelte Kontrolle.

Es resultiert eine deutliche Schutzwirkung durch das Antidot:

| | | | |
|---|---|---|---|
| Antidot:<br>α-(1,3-Dioxolan-2-ylmethoximino)-benzylcyanid (Z-Form) g AS/kg Saatgut | 2 1 0.5 | 2 1 0.5 | 2 1 0.5 |
| Herbizid:<br>N-(2-Chlorphenyl-sulfonyl)-N'-(4-methyl-6-methoxy-triazin-2-yl)-harnstoff | 0,125 kg AS/ha | 0,062 kg AS/ha | 0,031 kg AS/ha |
| relative Schutzwirkung | 25 %12.5 % 25 % | 50 % 50 %50 % | 50 % 65 % 63 % |
| Herbizid:<br>N-[2-(2'-Chloräthoxy-phenyl-sulfonyl]-N'-(4-methyl-6-methoxy-triazin-2-yl)-harnstoff | 0,125<br>kg AS/ha | 0,062<br>kg AS/ha | 0,031<br>kg AS/ha |
| relative Schutzwirkung | 12,5 %12,5 %12,5 % | 38 %38 %12,5 % | 50 % 50 % - |
| Herbizid:<br>N-[2-(2'-Methoxy-äthoxy)-phenyl-sulfonyl]-N'-(4-methyl-6-methoxy-triazin -2-yl)-harnstoff | 0,125<br>kg AS/ha | 0,062<br>kg AS/ha | 0,031<br>kg AS/ha |
| relative Schutzwirkung | 12,5 % - - | 50 %38 %25 % | 75 %50 %38 % |
| Herbizid:<br>N-[2-(3-Trifluor-propen-1-yl)-phenyl-sulfonyl]-N'-(4-methyl-6-methoxy-triazin-2-yl)-harnstoff | 0,125<br>kg AS/ha | 0,062<br>kg AS/ha | 0,031<br>kg AS/ha |
| relative Schutzwirkung | 38 %63 % 50 % | 38 % 50 % 38 % | 12,5 % 25 % 38 % |
| Herbizid:<br>N-(2-Pentafluor-äthoxyphenyl-sulfonyl)-N'-(4,6-dimethoxypyrimidin-2-yl)-harnstoff | 0,125<br>kg As/ha | 0,125<br>kg As/ha | 0,062<br>kg As/ha |
| relative Schutzwirkung | - 50 % - | - 38 % - | - 25 % - |
| Herbizid:<br>N-[2-(2'-Methoxyäthoxy)-phenyl-sulfonyl]-N'-(4-methyl-6-methoxy-triazin-2-yl)-harnstoff | 0,062<br>g As/ha | 0,031<br>g As/ha | |

| Antidot: | relative Schutzwirkung | |
|---|---|---|
| α-(2,2-Dimethoxy-äthoxyimino)-benzylcyanid 2 g AS/kg Samen | 50% | 63 % |
| α-(1,3-Dioxan-2-yl)-methoximino)-benzyl-cyanid 2 g AS/kg Samen | 50 % | 63 % |
| α-(5,5-Dimethyl-1,3-dioxan-2-yl-methox-imino)-benzylcyanid 2 g AS/kg Samen | 50 % | 63 % |
| α-(2, 2-Dimethoxy-äthoximino)-3,4-dichlorbenzylcyanid 2 AS/kg Samen | 12.5 % | 12.5 % |

**Beispiel 8**

**Tankmischung Vorauflauf in Weizen**

Weizensamen werden in Töpfe desselben Formats (oberer Ø 11 cm), die 0,5 l Erde enthalten, im Gewächshaus ausgesät. Nach dem Bedecken der Samen wird die als Antidot zu prüfende Substanz zusammen mit dem Herbizid als Tankmischung auf die Bodenoberfläche appliziert. 21 Tage nach der Applikation wird die Schutzwirkung des Antidots in Prozent bonitiert. Als Referenzen dienen dabei die mit Herbizid allein behandelten Pflanzen sowie die vollständig unbehandelte Kontrolle.

Es resultiert eine deutliche Schutzwirkung durch das Antidot:

| | | | | |
|---|---|---|---|---|
| Herbizid: | | | | |
| N-(2-Chlorphenyl-sulfonyl)-N'-(4-methyl-6-methoxy-triazin-2-yl)-harnstoff kg AS/ha | 0.125 | 0.062 | 0.031 | 0.015 |
| Antidot: | | | | |
| α-(1,3-Dioxolan-2-ylmethox-imino)-benzylcyanid (Z-Form) | 0.125 | 0.062 | 0.031 | 0.015 |
| Relative Schutzwirkung in % | 50 | 38 | 25 | 12.5 |

**Beispiel 9**

**Tankmischung Vorauflauf in Gerste**

Gerstensamen werden in Töpfe desselben Formats (oberer Ø 11 cm), die 0,5 l Erde enthalten, im Gewächshaus ausgesät. Nach dem Bedecken der Samen wird die als Antidot zu prüfende Substanz zusammen mit dem Herbizid als Tankmischung auf die Bodenoberfläche appliziert. 21 Tage nach der Applikation wird die Schutzwirkung des Antidots in Prozent bonitiert. Als Referenzen dienen dabei die mit Herbizid allein behandelten Pflanzen sowie die vollständig unbehandelte Kontrolle.

| | | |
|---|---|---|
| Antidot: | | |
| α-(1,3-Dioxolan-2-ylmethoximino)-benzylcyanid (Z-Form) kg AS/ha | 0.125 | 0.062 |
| Herbizid: | | |
| N-[2-(2'-Chloräthoxy)-phenyl-sulfonyl]-N'-(4-methyl-6-methoxy-triazin-2-yl )-harnstoff kg AS/ha | 0.125 | 0,062 |
| Relative Schutzwirkung in % | 50 | 25 |

**Patentansprüche**

1. Herbizides Mittel, das als herbiziden Wirkstoff einen Sulfonylharnstoff der Formel I

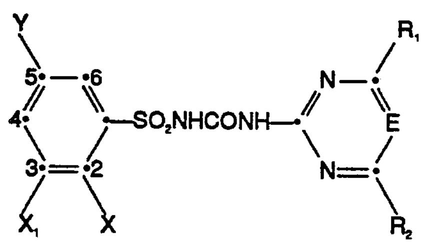

(I)

worin X Halogen, $C_1$–$C_3$ Halogenalkenyl, $C_1$–$C_3$ Alkoxycarbonyl, $C_3$–$C_4$ Alkenyloxy, $C_1$–$C_3$ Halogenalkoxy, $C_1$–$C_3$ Halogenalkylthio, $C_1$–$C_3$ Alkoxy-$C_1$–$C_2$-alkoxy oder Nitro,

$X_1$ Wasserstoff oder mit X zusammen ein Brückenglied $2\text{–}O\text{–}CH_2CH_2\text{–}3$,

$2\text{–}OCH\text{–}CH_2\text{–}$ oder $2\text{–}O\text{–}SO_2CH\text{–}CH_2\text{–}$,

|    |
$CH_3$    $CH_3$

Y Wasserstoff oder Halogen

E Stickstoff –N= oder Methin –CH=,

$R_1$ Halogen, $C_1$–$C_3$ Alkyl, $C_1$–$C_3$ Alkoxy, $C_1$–$C_4$ Halogenalkoxy, Cyclopropyl und

$R_2$ $C_1$–$C_3$ Alkyl, $C_1$–$C_3$ Alkoxy, $C_1$–$C_4$ Halogenalkoxy, Cyclopropyl oder Dimethylamino bedeutet, enthält, dadurch gekennzeichnet, dass es als Antidot einen Oximäther der Formel II

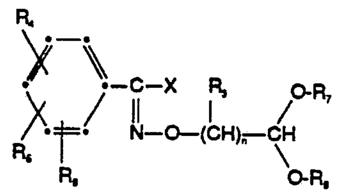

(II)

worin n 1 oder 2, $R_3$ und $R_4$ je Wasserstoff oder $C_1$–$C_4$–Alkyl, $R_5$ und $R_6$ je Wasserstoff, Halogen, $C_1$–$C_4$–Alkyl, $C_1$–$C_4$–Halogenalkyl, $C_1$–$C_4$– Alkoxy, $C_1$–$C_4$–Halogenalkoxy, $C_1$–$C_4$–Alkylthio, $C_1$–$C_4$–Halogenalkylthio, $C_1$–$C_4$–Alkylsulfinyl, $C_1$–$C_4$–Alkylsulfonyl, $C_1$–$C_4$–Halogenalkylsulfinyl, $C_1$–$C_4$–Halogenalkylsulfonyl oder Nitro, $R_7$ und $R_8$ einzeln je $C_1$–$C_4$–Alkyl, $C_3$–$C_4$–Alkenyl oder zusammen eine gegebenenfalls durch eine oder mehrere Alkylgruppen substituierte 1,2-Äthylen- oder 1,3-Propylengruppe und X eine Cyano-Gruppe bedeutet, enthält.

2. Herbizides Mittel gemäss Anspruch 1, dadurch gekennzeichnet, dass das Mengenverhältnis vom Antidot zum herbiziden Wirkstoff zwischen 1 : 10 und 10 : 1 liegt.

3. Herbizides Mittel gemäss Anspruch 1, das als herbiziden Wirkstoff einen Sulfonylharnstoff, ausgewählt aus der Gruppe N-[2-(2'-Chloräthoxy)-phenyl-sulfonyl]-N'-(4-methyl-6-methoxy-triazin-2-yl)-harnstoff, N-[2-(2'-Methoxyäthoxy)-phenyl-sulfonyl]-N'-(4-methyl-6methoxy-triazin-2-yl)-harnstoff, N-[2-(2-Butenyloxy)-phenylsulfonyl]-N'(4-methyl-6-methoxy-triazin-2-yl)-harnstoff, N-[2-(3-Trifluor-propen-1-yl) -phenyl-sulfonyl]-N'-(4-methyl-6-methoxy-triazin-2-yl)-harnstoff, N-(2,5-Dichlorphenyl-sulfonyl)-N'-(4-methyl-6-methoxypyrimidin-2-yl)-harnstoff, N-(2-Methoxycarbonyl-phenyl-sulfonyl)-N'-(4-methyl-6-difluormethoxy-pyrimidin-2-yl)-harnstoff, N-(2-Pentafluoräthoxyphenyl-sulfonyl)-N'-(4,6-dimethoxy-triazin-2yl)-harnstoff, N-(2-Chlorphenyl-sulfonyl)-N'-(4-methyl-6-methoxytriazin-2-yl)-harnstoff, N-(2-Methoxycarbonyl-phenyl-sulfonyl)-N'-(4,6-dimethyl-pyrimidin-2-yl)-harnstoff, N-(2-Allyloxy-phenyl-sulfonyl)-N'-(4-methyl-6-äthoxy-triazin-2-yl)-harnstoff, N-(2-Nitrophenylsulfonyl)-N'-(4-methyl-6-difluormethoxy-pyrimidin-2-yl)harnstoff, N-(2-Methoxycarbonyl-phenyl-sulfonyl)-N'-(4-methyl-6-methoxy-triazin-2-yl)-harnstoff, N-(2-Difluormethoxyphenylsulfonyl)-N'-(4methyl-6-methoxy-pyrimidin-2-yl)-harnstoff, N-(2-Methoxyäthoxyphenyl-sulfonyl)-N'-[4-methoxy-6-(2',2',2'-trifluoräthoxy)-1,3,5-triazin-2-yl]-harnstoff, N-(2-Methoxycarbonylphenylsulfonyl)-N'(4-cyclopropyl-6-methoxy-1,3,5-triazin-2-yl)-harnstoff N-(2-Difluormethoxyphenylsulfonyl)-N'-(4-cyclopropyl-6-methoxy-1,3,5-triazin-2-yl)-harnstoff, N-[2-(3',3',3'-trifluorprop-1-en-1-yl)phenyl-sulfonyl]-N'-(4-methoxy-6-methyl-1,3,5-triazin-2-yl)-harnstoff, N-(2-Methoxycarbonylphenyl-sulfonyl)-N'-(2,4-difluormethoxypyrimidin-2-yl)-harnstoff, N-(2-Difluormethoxyphenyl-sulfonyl)-N'(4-dimethylamino-6-methoxy-1,3,5triazin-2-yl)-harnstoff, N-[2-(1',2'-Dichlorvinyloxy)-phenyl-sulfonyl]-N'-(4-methoxy-6methyl-1,3,5-triazin-1-yl)-harnstoff, N-(2,2-Dioxo-3-methyl-1-oxa2-thia-1,2,3,4-tetrahydro-naphthalen-8-yl)-N'-(4-methoxy-6-methyl-1,3,5-triazin-2-yl)-harnstoff, N-(2,2-Dioxo-3-methyl-1-oxa-2-thia1,2,3,4-tetrahydro-naphthalen-8-yl)-N'-(4-methoxy-6-methyl-pyrimidin-2-yl)-harnstoff,N-(2-Methoxycarbonylphenyl-sulfonyl)-N'-4,6-dimethoxypyrimidin-2-yl)-harnstoff,N-(2-Methoxycarbonylphenylsulfonyl)-N'-(4-methoxy-6-methylpyrimidin-2-yl)-harnstoff, N-(2-Äthoxyphenyl-sulfonyl)-N'-(4-difluormethoxy-6-methoxypyrimidin-2-yl)-harnstoff, N-(2-Methoxyäthoxyphenyl-sulfonyl)-N'-(4,6-dimethoxytriazin-2-yl)-harnstoff, N-(2-Äthoxyphenyl-sulfonyl)-N'-(4-chlor6-methoxypyrimidin-2-yl)-harnstoff, N-(2-Äthoxyphenylsulfonyl)-N'(4-difluormethoxy-6-methylpyrimidin-2-yl)-harnstoff, N-[2-(2-Chloräthylmercapto)phenyl-sulfonyl)-N'-(4-methoxy-6-methyl-1,3,5-triazin2-yl)-harnstoff enthält, dadurch gekennzeichnet, dass es als Antidot einen Oximäther der Formel II gemäss Anspruch 1 enthält.

4. Herbizides Mittel gemäss Anspruch 1 enthaltend eine herbizide Wirksubstanz der Formel I, dadurch gekennzeichnet, dass es als Antidot einen Oximäther der Formel II gemäss Anspruch 1 worin n für 1 steht, $R_3$, $R_4$ und $R_6$ Wasserstoff darstellen, $R_5$ Wasserstoff, Halogen, Methyl, Difluormethyl, Trifluormethyl, Chlordifluormethyl, Methoxy, Difluormethoxy, Trifluormethoxy, Chlordifluormethoxy, Tetrafluoräthyl, Tetrafluoräthoxy oder Trifluormethylsulfonyl bedeutet, X eine Cyano-Gruppe ist und $R_7$ und $R_8$ die in Anspruch 1 angegebenen Bedeutungen haben, enthält.

5. Herbizides Mittel gemäss Anspruch 1 enthaltend eine herbizide Wirksubstanz der Formel I, dadurch gekennzeichnet, dass es als Antidot einen Oximäther der Formel II gemäss Anspruch 1, worin n für 1 steht, $R_3$, $R_4$ und $R_6$ Wasserstoff darstellen, $R_5$ Wasserstoff, Fluor, Chlor, Methyl, Difluormethyl, Trifluormethyl, Chlordifluormethyl, Methoxy, Difluormethoxy, Trifluormethoxy, Chlordifluormethoxy, Tetrafluoräthyl, Tetrafluoräthoxy, Tetrafluormethylsulfonyl bedeutet, X eine Cyano-Gruppe ist und $R_7$ und $R_8$ zusammen eine gegebenenfalls durch 1 - 4 Methylgruppen substituierte 1,2-Äthylengruppe bedeuten, enthält.

6. Herbizides Mittel gemäss Anspruch 1, das als Wirkstoff einen Sulfonylharnstoff der Formel I enthält, dadurch gekennzeichnet, dass es als Antidot α-(1,3-dioxolan-2-ylmethoximino)-benzylcyanid enthält.

7. Herbizides Mittel gemäss Anspruch 1, das als Wirkstoff einen Sulfonylharnstoff der Formel I enthält, dadurch gekennzeichnet, dass es als Antidot α-(2,2-Dimethoxyäthoximino)-benzylcyanid enthält.

8. Herbizides Mittel gemäss Anspruch 1, das als Wirkstoff einen Sulfonylharnstoff der Formel I enthält, dadurch gekennzeichnet, dass es als Antidot α-(1,3-Dioxan-2-ylmethoximino)-benzylcyanid enthält.

9. Herbizides Mittel gemäss Anspruch 1, das als Wirkstoff einen Sulfonylharnstoff der Formel I enthält, dadurch gekennzeichnet, dass es als Antidot α-(5,5-Dimethyl-1,3-dioxan-2-yl-methoximino)-benzylcyanid enthält.

10. Herbizides Mittel gemäss Anspruch 1, das als Wirkstoff einen Sulfonylharnstoff der Formel I enthält, dadurch gekennzeichnet, dass es als Antidot α-(2,2-Dimethoxyäthoximino)-3,4-dichlorbenzylcyanid enthält.

11. Herbizides Mittel gemäss Anspruch 1, das als Wirkstoff einen Sulfonylharnstoff der Formel I enthält, dadurch gekennzeichnet, dass es als Antidot α-(1,3-Dioxolan-2-yläthoximino)-3,4-dichlorbenzylcyanid enthält.

12. Herbizides Mittel gemäss Anspruch 1, das als Wirkstoff einen Sulfonylharnstoff der Formel 1 enthält, dadurch gekennzeichnet, dass es als Antidot α-(2,2-Diäthoxyäthoximino)-4-methoxybenzylcyanid enthält.

13. Verfahren zum Schützen von Pflanzenkulturen vor Schädigung durch Sulfonylharnstoffe, dadurch gekennzeichnet, dass man die Anwendung eines Sulfonylharnstoffs der Formel I gemäss Anspruch 1 auf die Anbaufläche der Pflanzenkultur, auf das Saatgut der Pflanzen, oder auf die Pflanze selbst mit der Anwendung eines Oximäthers der Formel II gemäss Anspruch 1 kombiniert.

14. Verfahren gemäss Anspruch 13, dadurch gekennzeichnet, dass der Sulfonylharnstoff und das Antidot in einer Aufwandmenge von jeweils 0,005 bis 10 kg pro ha Kulturboden verwendet werden.

15. Verfahren gemäss Anspruch 13 zum Schützen von Kulturpflanzen vor Schäden, die bei der Applikation von Sulfonylharnstoffen der Formel I gemäss Anspruch 1 auftreten, dadurch gekennzeichnet, dass man
a) die Anbaufläche für die Pflanze vor oder während der Applikation des Sulfonylharnstoffs oder
b) den Samen oder die Stecklinge der Pflanzen oder die Pflanze selbst mit einer wirksamen Menge eines Oximäthers der Formel II gemäss Anspruch 1 behandelt.

16. Verfahren gemäss Anspruch 13 zum Schützen von Kulturpflanzen vor Schäden, die bei der Applikation von Sulfonylharnstoffen der Formel I gemäss Anspruch 1 auftreten, dadurch gekennzeichnet, dass man als Oximäther α-(1,3-Dioxolan-2-ylmethoximino)-benzylcyanid verwendet.

**Revendications**

1. Produit herbicide contenant, en tant que substance active herbicide, une sulfonylurée de formule

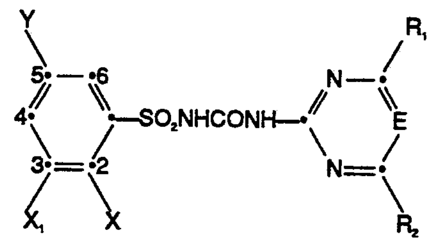

(I)

dans laquelle X représente un halogène, un groupe halogénoalcényle en $C_1$–$C_3$, (alcoxy en $C_1$-$C_3$)carbonyle, alcényloxy en $C_3$–$C_4$, halogénoalcoxy en $C_1$–$C_3$, halogénoalkylthio en $C_1$–$C_3$, (alcoxy en $C_1$–$C_3$)-alcoxy en $C_1$–$C_2$ ou nitro,

$X_1$ représente l'hydrogène ou bien, avec X, un pont 2-O-$CH_2CH_2$-3,

2–OCH–$CH_2$– ou 2–O–$SO_2$CH–$CH_2$–,
  |                              |
$CH_3$                      $CH_3$

Y représente l'hydrogène ou un halogène,

E représente l'azote –N= ou un groupe méthine–CH-,

$R_1$ représente un halogène, un groupe alkyle en $C_1$–$C_3$, alcoxy en $C_1$–$C_3$, halogénoalcoxy en $C_1$–$C_4$, cyclopropyle, et

$R_2$ représente un groupe alkyle en $C_1$–$C_3$, alcoxy en $C_1$–$C_3$, halogénoalcoxy en $C_1$–$C_4$, cyclopropyle ou diméthylamino,

caractérisé en ce qu'il contient en tant qu'antidote un éther-oxime de formule II

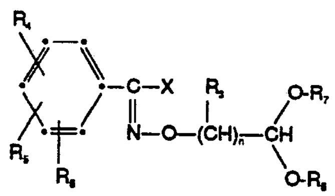

(II)

dans laquelle n est égal à 1 ou 2, $R_3$ et $R_4$ représentent chacun l'hydrogène ou un groupe alkyle en $C_1$– $C_4$, $R_5$ et $R_6$ représentent chacun l'hydrogène, un halogène, un groupe alkyle en $C_1$–$C_4$, halogénoalkyle en $C_1$–$C_4$, alcoxy en $C_1$–$C_4$, halogénoalcoxy en $C_1$– $C_4$, alkylthio en $C_1$–$C_4$, halogénoalkylthio en $C_1$– $C_4$, alkylsulfinyle en $C_1$–$C_4$, alkylsulfonyle en $C_1$– $C_4$, halogénoalkylsulfinyle en $C_1$–$C_4$, halogénoalkyl-sulfonyle en $C_1$–$C_4$ ou nitro, $R_7$ et $R_8$ représentent chacun un groupe alkyle en $C_1$–$C_4$, alcényle en $C_3$– $C_4$ ou forment ensemble un groupe 1,2-éthylène ou 1,3-propylène éventuellement substitué par un ou plusieurs groupes alkyle et X représente un groupe cyano.

2. Produit herbicide selon la revendication 1, caractérisé en ce que les proportions relatives entre l'antidote et la substance active herbicide vont de 1 : 10 à 10 : 1.

3.. Produit herbicide selon la revendication 1, contenant en tant que substance active herbicide une sulfonylurée choisie dans le groupe formé par les suivantes N-[2-(2'-chloréthoxy)-phényl-sulfonyl]-N'-(4-méthyl-6-méthoxy-triazine-2-yl)urée, N-[2-(2'-méthoxyéthoxy)-phényl-sulfonyl]-N'-(4-méthyl-6-méthoxy-triazine-2-yl)-urée, N-[2-(2-buténylоxy)-phényl-sulfonyl]-N'-(4-méthyl-6-méthoxy-triazine-2-yl)-urée, N-[2-(3trifluoro-propène-1-yl)-phényl-sulfonyl]-N'-(4-méthyl6-méthoxy-triazine-2-yl)-urée, N-(2,5-dichlorophénylsulfonyl)-N'-(4-méthyl-6-méthoxypyrimidine-2-yl)-urée, N-(2-méthoxycarbonyl-phényl-sulfonyl)-N'-(4-méthyl-6difluorométhoxy-pyrimidine-2-yl)-urée, N-(2-pentafluoréthoxyphényl-sulfonyl)-N'-(4,6-diméthoxy-triazine2-yl)-urée, N-(2-chlorophényl-sulfonyl)-N'-(4-méthyl-6méthoxy-triazine-2-yl)-urée, N-(2-méthoxycarbonylphényl-sulfonyl)-N'-(4,6-diméthyl-pyrimidine-2-yl)-urée, N-(2-allyloxy-phényl-sulfonyl)-N'-(4-méthyl-6-éthoxytriazine-2-yl)-urée, N-(2-nitrophényl-sulfonyl)-N'-(4méthyl-6-difluorométhoxy-pyrimidine-2-yl)-urée, N-(2méthoxycarbonyl-phényl-sulfonyl)-N'-(4-méthyl-6-méthoxytriazine-2-yl)-urée, N-(2-difluorométhoxyphénylsulfonyl)-N'-(4-méthyl-6-méthoxy-pyrimidine-2-yl)-urée, N-(2-méthoxyéthoxyphényl-sulfonyl)-N'-[4-méthoxy-6(2',2',2'-trifluoréthoxy)-1,3,5-triazine-2-yl]-urée, N-(2-méthoxycarbonylphényl-sulfonyl)-N'-(4-cyclopropyl6-méthoxy-1,3,5-triazine-2-yl)-urée, N-(2-difluorométhoxyphényl-sulfonyl)-N'-(4-cyclopropyl-6-méthoxy1,3,5-triazine-2-yl)-urée, N-[2-(3',3',3'-trifluoropropa-1-ène-1-yl)-phényl-sulfonyl]-N'-(4-méthoxy-6-méthyl-1,3,5-triazine-2-yl)-urée, N-(2-méthoxycarbonylphénylsulfonyl)-N'-(2,4-difluorométhoxy-pyrimidine-2-yl)-urée, N-(2-difluorométhoxyphényl-sulfonyl)-N'-(4-diméthylamino-6-méthoxy-1,3,5-triazine-2-yl)-urée, N-[2-(1',2'dichlorovinyloxy)-phényl-sulfonyl]-N'-(4-méthoxy-6méthyl-1,3,5-triazine-1-yl)-urée, N-(2,2-dioxo-3-méthyl1-oxa-2-thia-1,2,3,4-tétrahydrohaphtalène-8-yl)-N' (4-méthoxy-6-méthyl-1,3,5-triazine-2-yl) -urée, N-(2,2dioxo-3-méthyl-1-oxa-2-thia-1,2,3,4-tétrahydronaphtalène8-yl)-N'-(4-méthoxy-6-méthyl-pyrimidine-2-yl)-urée, N-(2-méthoxycarbonylphényl-sulfonyl)-N'-((4,6-diméthoxypyrimidine-2-yl)-urée, N-(2-méthoxycarbonylphénylsulfonyl)-N'-(4-méthoxy-6-méthylpyrimidine-2-yl)-urée, N-(2-éthoxyphényl-sulfonyl)-N'-(4-difluorométhoxy-6méthoxy-pyrimidine-2-yl)-urée, N-(2-méthoxyéthoxyphénylsulfonyl)-N'-(4,6-diméthoxytriazine-2-yl)-urée, N-(2éthoxyphényl-sulfonyl)-N'-(4-chloro-6-méthoxypyrimidine-2-yl)-urée, N-(2-éthoxyphénylsulfonyl)-N'-(4-difluorométhoxy-6-méthylpyrimidine-2-yl)-urée, N-[2(2-chloréthylmercapto)-phényl-sulfonyl]-N'-(4-méthoxy6-méthyl-1,3,5-triazine-2-yl)-urée, caractérisé en ce qu'il contient en tant qu'antidote un éther-oxime de formule II selon la revendication 1.

4. Produit herbicide selon la revendication 1, contenant une substance active herbicide de formule I et caractérisé en ce qu'il contient en tant qu'antidote un éther-oxime de formule II selon la revendication 1 dans laquelle n est égal à 1; $R_3$, $R_4$ et $R_6$ représentent l'hydrogène, $R_5$ représente l'hydrogène, un halogène, un groupe méthyle, difluorométhyle,

trifluorométhyle, chlorodifluorométhyle, méthoxy, difluorométhoxy, trifluorométhoxy, chlorodifluorométhoxy, tétrafluoréthyle, tétrafluoréthoxy ou trifluorométhylsulfonyle, X représente un groupe cyano et $R_7$ et $R_8$ ont les significations indiquées dans la revendication 1.

5. Produit herbicide selon la revendication 1, contenant une substance active herbicide de formule I et caractérisé en ce qu'il contient en tant qu'antidote un éther-oxime de formule II selon la revendication 1, dans laquelle n est égal à 1, $R_3$, $R_4$ et $R_6$ représente l'hydrogène, $R_5$ représente l'hydrogène, le fluor, le chlore, un groupe méthyle, difluorométhyle, trifluorométhyle, chlorodifluorométhyle, méthoxydifluorométhoxy, trifluorométhoxy, chlorodifluorométhoxy, tétrafluoréthyle, tétrafluoréthoxy, tétrafluorométhylsulfonyle, X représente un groupe cyano et $R_7$ et $R_8$ forment ensemble un groupe 1,2-éthylène éventuellement substitué par 1 à 4 groupes méthyle.

6. Produit herbicide selon la revendication 1, contenant en tant que substance active une sulfonylurée de formule I et caractérisé en ce qu'il contient en tant qu'antidote le cyanure d'α-(1,3-dioxolanne-2ylméthoximino)-benzyle.

7. Produit herbicide selon la revendication 1, contenant en tant que substance active une sulfonylurée de formule I et caractérisé en ce qu'il contient en tant qu'antidote le cyanure d'α-(2,2-diméthoxyéthoximino)-benzyle.

8. Produit herbicide selon la revendication 1, contenant en tant que substance active une sulfonylurée de formule I et caractérisé en ce qu'il contient en tant qu'antidote le cyanure d'α-(1,3-dioxanne-2-yl)-méthoximino)benzyle.

9. Produit herbicide selon la revendication 1, contenant en tant que substance active une sulfonylurée de formule I et caractérisé en ce qu'il contient en tant qu'antidote le cyanure d'α-(5,5-diméthyl-1,3-dioxanne-2-yl)-méthoximino)-benzyle.

10. Produit herbicide selon la revendication 1, contenant en tant que substance active une sulfonylurée de formule I et caractérisé en ce qu'il contient en tant qu'antidote le cyanure d'α-(2,2-diméthoxyéthoximino)-3,4-dichlorobenzyle.

11. Produit herbicide selon la revendication 1, contenant en tant que substance active une sulfonylurée de formule I et caractérisé en ce qu'il contient en tant qu'antidote le cyanure d'α-(1,3-dioxolanne-2yléthoximino)-3,4-dichlorobenzyle.

12. Produit herbicide selon la revendication 1, contenant en tant que substance active une sulfonylurée de formule I et caractérisé en ce qu'il contient en tant qu'antidote le cyanure d'α-(2,2-diéthoxyéthoximino)4-méthoxybenzyle.

13. Procédé pour protéger les cultures contre les dégâts provoqués par les sulfonylurées, caractérisé en ce que l'on combine l'application d'une sulfonylurée de formule I selon la revendication 1 à l'aire de culture de la plante, aux semences de la plante ou à la plante elle-même avec l'application d'un éther-oxime de formule II selon la revendication 1.

14. Procédé selon la revendication 13, caractérisé en ce que la sulfonylurée et l'antidote sont utilisés chacun à une dose d'application de 0,005 à 10 kg par ha du sol de culture.

15. Procédé selon la revendication 13, pour protéger les plantes cultivées contre les dégâts survenant à l'application des sulfonylurées de formule I selon la revendication 1, caractérisé en ce que
a) on traite l'aire de culture de la plante avant ou durant l'application de la sulfonylurée, ou bien
b) on traite les semences ou les plants de la plante ou la plante elle-même, par une quantité efficace d'un éther-oxime de formule II selon la revendication 1.

16. Procédé selon la revendication 13, pour protéger les plantes cultivées contre les dégâts survenant à l'application des sulfonylurées de formule I selon la revendication 1, caractérisé en ce que l'on utilise en tant qu'éther-oxime le cyanure d'α-(1,3dioxolanne-2-ylméthoximino)-benzyle.

## Claims

1. A herbicidal agent containing as herbicidal active ingredient a sulfonylurea of the formula I

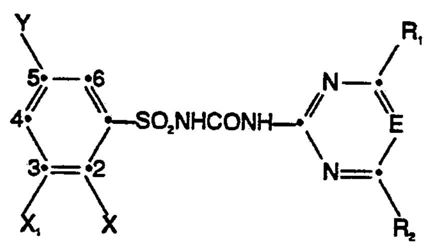

(I)

in which

X is halogen, $C_1$–$C_3$ haloalkenyl, $C_1$–$C_3$ alkoxycarbonyl, $C_3$–$C_4$ alkenyloxy, $C_1$–$C_3$ haloalkoxy, $C_1$–$C_3$ haloalkylthio, $C_1$–$C_3$ alkoxy–$C_1$–$C_2$ alkoxy or nitro,

$X_1$ is hydrogen, or together with X forms a bridge member $2{-}O{-}CH_2CH_2{-}$, $2{-}OCH{-}CH_2{-}$ or $2{-}O{-}SO_2C{-}CH_2{-}3$,

$CH_3$ $CH_3$

Y is hydrogen or halogen,

E is nitrogen –N= or methine –CH=,

$R_1$ is halogen, $C_1$–$C_3$ alkyl, $C_1$–$C_3$ alkoxy, $C_1$–$C_4$ haloalkoxy or cyclopropyl, and

$R_2$ is $C_1$–$C_3$ alkyl, $C_1$–$C_3$ alkoxy, $C_1$–$C_4$ haloalkoxy, cyclopropyl or dimethylamino,

which agent contains as antidote an oxime ether of the formula II

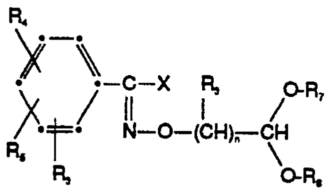

(II)

in which n is 1 or 2, $R_3$ and $R_4$ are each hydrogen or $C_1$–$C_4$ alkyl, $R_5$ and are each hydrogen, halogen, $C_1$–$C_4$ alkyl, $C_1$–$C_4$ haloalkyl, $C_1$–$C_4$ alkoxy, $C_1$-$C_4$haloalkoxy, $C_1$–$C_4$ alkylthio, $C_1$–$C_4$ haloalkylthio, $C_1$–$C_4$ alkylsulfinyl, $C_1$–$C_4$ alkylsulfonyl, $C_1$–$C_4$ haloalkylsulfinyl, $C_1$–$C_4$ haloalkysulfonyl or nitro, $R_7$ and $R_8$ separately are each $C_1$–$C_4$ alkyl or $C_3$–$C_4$alkenyl, or together are α 1,2-ethylene group or 1,3-propylene group each unsubstituted or substituted by one or more alkyl groups, and X is a cyano group.

2. A herbicidal agent according to claim 1, wherein the quantity ratio of antidote to herbicidal active ingredient is between 1 : 10 and 10 : 1.

3. A herbicidal agent according to claim 1, which contains as herbicidal active ingredient a sulfonylurea selected from the group comprising N-[2-(2'-chloroethoxy)-phenyl-sulfonyl]-N'-(4-methyl-6methoxy-triazin-2-yl)-urea, N-[2-(2'-methoxyethoxy)-phenyl-sulfonyl]-N'(4-methyl-6-methoxy-triazin-2-yl)-urea, N-[2-(2-butenyloxy)-phenylsulfonyl]-N'-(4-methyl-6-methoxy-triazin-2-yl)-urea, N-[2-(3-trifluoropropen-1-yl)-phenyl-sulfonyl]-N'-(4-methyl-6-methoxy-triazin-2-yl) -urea, N-(2,5-dichlorophenyl-sulfonyl)-N'-(4-methyl-6-methoxypyrimidin2-yl)-urea, N-(2-methoxycarbonyl-phenyl-sulfonyl)-N'-(4-methyl-6-difluoromethoxy-pyrimidin-2-yl)-urea, N-(2-pentafluoro-ethoxyphenylsulfonyl)-N'-(4,6-dimethoxytriazin-2-yl)-urea,N- (2-chlorophenylsulfonyl)-N'-(4-methyl-6-methoxy-triazin-2-yl)-urea, N-(2-methoxycarbonyl-phenyl-sulfonyl)-N'-(4,6-dimethylpyrimidin-2-yl)-urea, N-(2allyloxy-phenyl-sulfonyl)-N'-(4-methyl-6-ethoxy-triazin-2-yl)-urea, N(2-nitrophenyl-sulfonyl)-N'-(4-methyl-6-difluoromethoxy-pyrimidin-2-yl)urea, N-(2-methoxycarbonyl-phenyl-sulfonyl)-N'-(4-methyl-6-methoxytriazin-2-yl)-urea, N-(2-difluoromethoxyphenylsulfonyl)-N'-(4-methyl-6methoxy-pyrimidin-2-yl)-urea, N-(2-methoxyethoxyphenyl-sulfonyl)-N'-[4methoxy-6-(2',2',2'-trifluoroethoxy)-1,3,5-triazin-2-yl]-urea, N-(2methoxycarbonylphenyl-sulfonyl)-N'-(4-cyclopropyl-6-methoxy-1,3,5triazin-2-yl)-urea, N-(2-difluoromethoxyphenyl-sulfonyl)-N'-(4-cyclopropyl-6-methoxy-1,3,5-triazin-2-yl)-urea, N-[2-(3',3',3'-trifluoroprop1-en-1-yl)-phenyl-sulfonyl]-N'-(4-methoxy-6-methyl-1,3,5-triazin-2-yl)urea, N-(2-methoxycarbonylphenyl-sulfonyl)-N'-(2,4-difluoromethoxypyrimidin-2-yl)-urea, N-(2-difluoromethoxyphenyl-sulfonyl)-N'-(4-dimethylamino-6-methoxy-1,3,5-triazin-2-yl)-urea, N-[2-(1',2'dichlorovinyloxy)-phenyl-sulfonyl]-N'-(4-methoxy-6-methyl-1,3,5-triazin1-yl)-urea, N-(2,2-dioxo-3-methyl-1-oxa-2-thia-1,2,3,4-tetrahydronaphthalen-8-yl)-N'-(4-methoxy-6-methyl-1,3,5-triazin-2-yl)-urea, N(2,2-dioxo-3-methyl-1-oxa-2-thia-1,2,3,4-tetrahydro-naphthalen-8-yl)-N'(4-methoxy-6-methyl-pyrimidin-2-yl)-urea, N-(2-methoxycarbonylphenylsulfonyl)-N'-4,6-dimethoxypyrimidin-2-yl)-urea, N-(2-methoxycarbonyl-phenyl-sulfonyl)-N'-(4-methoxy-6-methylpyrimidin-2-yl)-urea, N-(2ethoxyphenyl-sulfonyl)-N'(4-difluoromethoxy-6-methoxy-pyrimidin-2-yl)urea, N-(2-methoxyethoxyphenyl-sulfonyl)-N'-(4,6-dimethoxytriazin-2-yl)urea, N-(2-ethoxyphenyl-sulfonyl)-N'-(4-chloro-6-methoxypyrimidin-2-yl)urea, N-(2-ethoxyphenylsulfonyl)-N'-(4-difluoromethoxy-6-methylpyrimidin-2-yl)-urea and N-[2-(2-chloroethylmercapto)-phenyl-sulfonyl)N'-(4-methoxy-6-methyl-1,3,5-triazin-2-yl)-urea, which agent contains as antidote an oxime ether of the formula II according to claim 1.

4. A herbicidal agent according to claim I containing a herbicidal active ingredient of the formula I, which agent contains, as antidote, an oxime ether of the formula II according to claim I, in which n is 1, $R_3$, $R_4$ and $R_6$ are hydrogen, $R_5$ is hydrogen, halogen, methyl, difluoromethyl, trifluoromethyl, chlorodifluoromethyl, methoxy, difluoromethoxy, trifluoromethoxy, chlorodifluoromethoxy, tetrafluoroethyl, tetrafluoroethoxy or trifluoromethylsulfonyl, X is a cyano group and $R_7$ and $R_8$ have the meanings defined in claim 1.

5. A herbicidal agent according to claim 1 containing a herbicidal active ingredient of the formula I, which agent contains, as antidote, an oxime ether of the formula II according to claim 1, in which n is 1, $R_3$, $R_4$ and $R_6$ are hydrogen, $R_5$ is hydrogen, fluorine, chlorine, methyl, difluoromethyl, trifluoromethyl, chlorodifluoromethyl, methoxy, difluoromethoxy, trifluoromethoxy, chlorodifluoromethoxy, tetrafluoroethyl, tetrafluoroethoxy or tetrafluoromethylsulfonyl, X is a cyano group, and $R_7$ and $R_8$ together are a 1,2-ethylene group which is unsubstituted or substituted by 1-4 methyl groups.

6. A herbicidal agent according to claim 1 containing as active ingredient a sulfonylurea of the formula I, which agent contains, as antidote, α-(1,3-dioxolan-2-ylmethoximino)-benyl cyanide.

7. A herbicidal agent according to claim 1 containing as active ingredient a sulfonylurea of the formula I, which agent contains, as antidote, α-(2,2-dimethoxyethoximino)-benzyl cyanide.

8. A herbicidal agent according to claim 1 containing as active ingredient a sulfonylurea of the formula I, which agent contains, as antidote, α-(1,3-dioxan-2-ylmethoximino)-benzyl cyanide.

9. A herbicidal agent according to claim 1 containing as active ingredient a sulfonylurea of the formula I, which agent contains, as antidote, α-(5,5-dimethyl-1,3-dioxan-2-yl-methoximino)-benzyl cyanide.

10. A herbicidal agent according to claim 1 containing as active ingredient a sulfonylurea of the formula I, which agent contains, as antidote, α-(2,2-dimethoxyethoximino)-3,4-dichlorobenzyl cyanide.

11. A herbicidal agent according to claim 1 containing as active ingredient a sulfonylurea of the formula I, which agent contains, as antidote, α-(1,3-dioxolan-2-ylethoximino)-3,4-dichlorobenzyl cyanide.

12. A herbicidal agent according to claim 1 containing as active ingredient a sulfonylurea of the formula I, which agent contains, as antidote, α-(2,2-diethoxyethoximino)-4-methoxybenzyl cyanide.

13. A process for protecting cultivated plants from damage caused by sulfonylureas, which process comprises combining the application of a sulfonylurea of the formula I according to claim 1 to the crop area of the cultivated plants, to the seeds of the plants, or to the plants themselves, with the application of an oxime ether of the formula II according to claim 1.

14. A process according to claim 13, wherein the sulfonylurea and the antidote are used in amounts in each case of from 0.005 to 10 kg per hectare of cultivated soil.

15. A process according to claim 13 for protecting cultivated plants from damage that occurs on application of a sulfonyurea of the formula I according to claim 1, which process comprises
a) treating the cultivated area for the plant before or during application of the sulfonylurea, or
b) treating the seeds or seedlings of the plants or the plant itself with an effective amount of an oxime ether of the formula II according to claim 1.

16. A process according to claim 13 for protecting cultivated plants from damage that occurs on application of a sulfonylurea of the formula I according to claim 1, wherein the oxime ether used is α-(1,3-dioxolan2-ylmethoximino)-benzyl cyanide.